# FASCICULE DE BREVET EUROPEEN

(11) **EP 4 183 609 B1**
(45) Date de publication et mention de la délivrance du brevet: **29.10.2025**
(21) Numéro de dépôt: 22206721.7
(22) Date de dépôt: 10.11.2022
(51) Int. Cl.: B60K 17/10, B66F 9/06, B60K 17/354, B60K 17/356

(54) **VÉHICULE DE TRAVAIL ÉLECTRIQUE À TRACTION HYDROSTATIQUE ÉQUIPÉ D'UNE ASSISTANCE HYDRAULIQUE À L'ENTRAÎNEMENT EN DÉPLACEMENT**
ELEKTRISCH ANGETRIEBENES HYDROSTATISCHES NUTZFAHRZEUG MIT HYDRAULISCHER UNTERSTÜTZUNG BEIM ANTRIEB
ELECTRIC WORK VEHICLE WITH HYDROSTATIC TRACTION AND HYDRAULIC ASSISTANCE FOR THE DISPLACEMENT DRIVE

(30) Priorité: 18.11.2021 FR 2112223
(43) Date de publication de la demande: 24.05.2023
(73) Titulaire: MANITOU BF, 44150 Ancenis (FR)
(72) Inventeur: BROCHARD, François, 44150 ANCENIS (FR)
(74) Mandataire: Loyer & Abello

(56) Documents cités:
- WO-A1-2020/196062
- DE-A1- 102010 010 578
- DE-A1- 102015 220 513
- FR-A1- 2 182 153
- GB-A- 2 502 060
- US-A1- 2012 023 924
- US-A1- 2013 164 148

## Description

### Domaine technique

L'invention se rapporte à un véhicule de travail électrique entraîné en déplacement par un système de traction à transmission hydrostatique et un système de traction à transmission hydraulique.

### Arrière-plan technologique

Les véhicules de travail, en particulier les engins de manutention de charge, sont généralement équipés d'un moteur à combustion interne de type diesel qui fournit l'énergie nécessaire à l'effort de traction pour l'entraînement en déplacement du véhicule et à l'actionnement des organes cinématiques et dynamiques pour la manutention.

L'intégration de considérations environnementales (baisse des émissions de gaz à effet de serre) et de contraintes réglementaires (pour la manutention en entrepôt par exemple) a conduit à l'électrification des véhicules de travail.

L'une des difficultés liées à cette évolution tient au remplacement du moteur à combustion interne par un volumineux système de motorisation électrique, ce qui génère d'importantes contraintes d'encombrement affectant le dimensionnement de la chaîne cinématique du véhicule de travail.

Le document DE 100 33 803 A1 décrit un chariot de manutention électrique entraîné en déplacement par un système de transmission hydrostatique dont la pompe alimente également un système hydraulique dédié à la manutention. Mais le dimensionnement contraint des composantes hydrostatiques de base, pompe et moteur, limite la puissance qui peut être délivrée pour répondre à un besoin de déplacement, c'est-à-dire à un besoin de couple ou un besoin de vitesse d'avancement du chariot. Dans cette architecture, une pompe commune est utilisée pour l'hydrostatique de traction et l'hydraulique de manutention. Un véhicule de travail conforme au préambule de la revendication 1 est décrit dans le document US 2012/0023924 A1 ou dans le document US 2013/0164148 A1.

### Résumé

Une idée à la base de l'invention est de coupler un système de traction à transmission hydraulique au système hydraulique d'un véhicule de travail, notamment pour assister le système de traction à transmission hydrostatique lorsqu'il ne fournit pas assez de puissance pour répondre à un besoin de déplacement spécifié par un opérateur.

Selon un mode de réalisation, l'invention fournit un véhicule de travail comportant une source d'énergie électrique, un moteur électrique d'entraînement hydrostatique et un moteur électrique d'entraînement hydraulique alimentés en énergie électrique par la source d'énergie électrique, au moins un pont de transmission équipé de roues motrices, au moins un capteur de besoin de déplacement configuré pour mesurer un besoin de déplacement du véhicule de travail, un système de traction à transmission hydrostatique comportant une pompe hydrostatique entraînée par le moteur électrique d'entraînement hydrostatique, et un moteur hydrostatique connecté à la pompe hydrostatique, le moteur hydrostatique permettant l'entraînement en rotation des roues motrices d'un dit pont de transmission, un système hydraulique comportant une pompe hydraulique entraînée par le moteur électrique d'entraînement hydraulique, un boîtier de distribution hydraulique connecté à la pompe hydraulique et au moins un dispositif à commande hydraulique, le au moins un dispositif à commande hydraulique étant alimenté en fluide hydraulique par le boîtier de distribution hydraulique, un système de traction à transmission hydraulique comportant un moteur hydraulique alimenté par le boîtier de distribution hydraulique, le moteur hydraulique permettant l'entraînement en rotation des roues motrices d'un dit pont de transmission, et une unité de commande configurée pour contrôler, en fonction du besoin de déplacement du véhicule de travail, d'une part, un débit de fluide hydraulique fourni par la pompe hydraulique et, d'autre part, le boîtier de distribution hydraulique de manière à répartir le débit de fluide hydraulique fourni par ladite pompe hydraulique entre le ou les dispositifs à commande hydraulique et le moteur hydraulique.

La transmission hydrostatique, plus compacte et flexible qu'une transmission mécanique, est préférée.

Selon un mode de réalisation, le véhicule de travail comporte en outre un capteur de vitesse d'avancement configuré pour mesurer une vitesse d'avancement du véhicule de travail, et l'unité de commande est configurée pour contrôler un débit de fluide hydraulique fourni par la pompe hydraulique, en fonction du besoin de déplacement et de la vitesse d'avancement du véhicule de travail.

Un tel véhicule de travail peut comporter une chaîne cinématique à pluralité de ponts de transmission, indépendants les uns des autres ou liés mécaniquement.

Selon un mode de réalisation, le véhicule de travail comporte au moins deux ponts de transmission, chaque pont de transmission étant équipé de roues motrices, le moteur hydrostatique du système de traction à transmission hydrostatique est couplé à un premier pont de transmission, et le moteur hydraulique du système de traction à transmission hydraulique est couplé à un deuxième pont de transmission.

Selon un autre mode de réalisation, le moteur hydrostatique du système de traction à transmission hydrostatique et le moteur hydraulique du système de traction à transmission hydraulique sont couplés à un même pont de transmission.

L'unité de commande selon l'invention est configurée pour déclencher l'entraînement du moteur hydraulique lorsque le besoin de déplacement du véhicule de travail est supérieur à une première valeur seuil de besoin de déplacement, et pour arrêter l'entraînement dudit moteur hydraulique lorsque le besoin de déplacement du véhicule de travail est inférieur à une deuxième valeur seuil de besoin de déplacement.

Les valeurs seuils de besoin de déplacement peuvent être fixées en fonction des capacités du système de traction à transmission hydrostatique. Autrement dit, lorsque ledit système de traction à transmission hydrostatique ne développe pas assez de puissance pour répondre au besoin de déplacement du véhicule de travail, l'unité de commande active le système de traction à transmission hydraulique. Inversement, si le système de traction principal à transmission hydrostatique peut délivrer assez de puissance pour répondre au besoin de déplacement du véhicule de travail, l'unité de commande désactive le système de traction auxiliaire à transmission hydraulique.

Selon un mode de réalisation, le véhicule de travail comporte en outre un capteur de vitesse de rotation configuré pour mesurer une vitesse de rotation du moteur électrique d'entraînement hydraulique, l'unité de commande étant configurée pour déterminer un besoin en débit de fluide hydraulique du moteur hydraulique à partir du besoin de déplacement du véhicule de travail, pour déterminer une valeur de consigne de débit de la pompe hydraulique en comparant une somme des besoins en débit de fluide hydraulique du ou de chacun des dispositifs à commande hydraulique et d'un besoin en débit de fluide hydraulique du moteur hydraulique avec le débit de fluide hydraulique maximal de la pompe hydraulique, la valeur de consigne de débit de la pompe hydraulique correspondant à la plus petite des valeurs comparées, pour déterminer une valeur de consigne de vitesse de rotation du moteur électrique d'entraînement hydraulique à partir de la valeur de consigne de débit de la pompe hydraulique et d'une cylindrée de la pompe hydraulique, et pour asservir la valeur mesurée de la vitesse de rotation du moteur électrique d'entraînement hydraulique à la valeur de consigne de vitesse de rotation du moteur électrique d'entraînement hydraulique.

Autrement dit, l'unité de commande est configurée pour piloter la vitesse de rotation du moteur électrique d'entraînement hydraulique afin de contrôler la variation du débit de fluide hydraulique refoulé par la pompe hydraulique pour qu'elle accompagne la dynamique du besoin en débit de fluide hydraulique du ou des dispositifs à commande hydraulique et du moteur hydraulique.

Selon un mode de réalisation, le véhicule de travail comporte en outre un capteur de couple configuré pour mesurer un couple du moteur électrique d'entraînement hydraulique, un capteur de pression configuré pour mesurer une pression de service du fluide hydraulique refoulé par la pompe hydraulique, et dans lequel ladite pompe hydraulique présente une cylindrée réglable, et l'unité de commande est configurée pour déterminer la cylindrée de ladite pompe hydraulique à partir d'une mesure du couple du moteur électrique d'entrainement hydraulique et d'une mesure de la pression de service du fluide hydraulique refoulé par la pompe hydraulique.

Selon un mode de réalisation, le au moins un dispositif à commande hydraulique comporte un dispositif de direction hydraulique.

Selon un mode de réalisation, le véhicule de travail comporte en outre au moins un capteur de vitesse d'avancement configuré pour mesurer une vitesse d'avancement du véhicule de travail et un capteur de direction configuré pour mesurer un besoin de direction, et l'unité de commande contrôle le débit de fluide hydraulique refoulé par la pompe hydraulique et contrôle le boîtier de distribution hydraulique de manière à alimenter le dispositif de direction hydraulique lorsqu'il existe un besoin de direction ou lorsque la vitesse d'avancement dudit véhicule de travail est non nulle.

Selon un mode de réalisation, le boîtier de distribution hydraulique est configuré pour alimenter en fluide hydraulique le dispositif de direction hydraulique prioritairement par rapport au moteur hydraulique et, le cas échéant, à un autre dit dispositif à commande hydraulique, lorsque la somme des besoins en débit de fluide hydraulique du moteur hydraulique, du dispositif de direction hydraulique et, le cas échéant, de l'autre ou de chacun des autres dispositifs à commande hydraulique est supérieure au débit de fluide hydraulique maximal de la pompe hydraulique.

Autrement dit, le boîtier de distribution hydraulique est configuré de sorte que le dispositif de direction hydraulique soit toujours pleinement alimentée en débit de fluide hydraulique, peu importe, d'une part, le besoin en débit de fluide hydraulique du ou des autres dispositifs à commande hydraulique et peu importe, d'autre part, le besoin en débit du moteur hydraulique, par exemple entraîné en débit lorsque le système de traction à transmission hydraulique assiste le système de traction à transmission hydrostatique pour l'entraînement en déplacement du véhicule de travail.

Selon un mode de réalisation, le au moins un dispositif à commande hydraulique comporte un dispositif de freinage hydraulique.

Selon un mode de réalisation, le véhicule de travail comporte au moins un capteur de vitesse d'avancement configuré pour mesurer une vitesse d'avancement du véhicule de travail et un capteur de freinage configuré pour mesurer un besoin de freinage, et l'unité de commande contrôle le débit du fluide hydraulique refoulé par la pompe hydraulique et contrôle le boîtier de distribution hydraulique de manière à alimenter le dispositif de freinage hydraulique lorsqu'il existe un besoin de freinage ou lorsque la vitesse d'avancement dudit véhicule de travail est non nulle.

Selon un mode de réalisation, le boîtier de distribution hydraulique est configuré pour alimenter en fluide hydraulique le dispositif de freinage hydraulique prioritairement par rapport au moteur hydraulique et, le cas échéant, à un autre dit dispositif à commande hydraulique, lorsque la somme des besoins de débit de fluide hydraulique du moteur hydraulique, du dispositif de freinage hydraulique et, le cas échéant, de l'autre ou de chacun des autres dispositifs à commande hydraulique est supérieure au débit de fluide hydraulique maximal de la pompe hydraulique.

Autrement dit, l'unité de commande pilote le boîtier de distribution afin que le dispositif de freinage hydraulique soit toujours pleinement alimentée en débit de fluide hydraulique, peu importe, d'une part, le besoin en débit de fluide hydraulique du ou des autres dispositifs à commande hydraulique et peu importe, d'autre part, le besoin en débit du moteur hydraulique, par exemple entraîné en débit lorsque le système de traction à transmission hydraulique assiste le système de traction à transmission hydrostatique pour l'entraînement en déplacement du véhicule de travail.

Selon un mode de réalisation, le véhicule de travail comporte en outre un dispositif de manutention de charge, et le au moins un dispositif à commande hydraulique comporte au moins un actionneur hydraulique pour actionner le dispositif de manutention de charge.

Selon un mode de réalisation, l'unité de commande est configurée pour piloter le boîtier de commande hydraulique afin de ne pas alimenter en débit de fluide hydraulique le ou les actionneurs hydrauliques du dispositif de manutention de charge lorsqu'un besoin de déplacement dudit véhicule de travail est supérieur à une troisième valeur seuil de besoin de déplacement, et pour alimenter en débit de fluide hydraulique ledit ou lesdits actionneurs hydrauliques lorsqu'un besoin de déplacement dudit véhicule de travail est inférieur à une quatrième valeur seuil de besoin de déplacement, la troisième valeur seuil de besoin de déplacement étant supérieure ou égale à la quatrième valeur seuil de besoin de déplacement.

Lorsque la puissance dédiée à l'entraînement en déplacement du véhicule de travail est insuffisante en dépit de l'assistance à la traction du moteur hydraulique, le système hydraulique peut être délesté en puissance en désactivant le ou les actionneurs du système de manutention de charge, et la puissance économisée est redirigée vers le système de traction à transmission hydraulique.

L'unité de commande arbitre ainsi entre le besoin en débit de fluide hydraulique pour l'entraînement en déplacement du véhicule de travail et le besoin de débit de fluide hydraulique nécessaire à l'actionnement des organes de manutention de charge.

Selon un mode de réalisation, le véhicule de travail comporte en outre un organe de commande destiné à être actionné par un opérateur pour piloter le dispositif de manutention de charge, au moins un capteur configuré pour mesurer une position de l'organe de commande, et l'unité de commande dudit véhicule de travail est configurée pour déterminer un besoin en débit de fluide hydraulique du ou de chaque actionneur hydraulique du dispositif de manutention de charge à partir de la mesure de position de l'organe de commande.

Lorsque le système de traction à transmission hydrostatique comporte un ensemble motoréducteur, une autre idée à la base de certains aspects de l'invention est de compenser la perte de couple liée à un changement de rapport du réducteur mécanique par une assistance hydraulique à la traction. La baisse de vitesse ou d'accélération du véhicule de travail liée au débrayage lors d'un changement de rapport n'est pas seulement inconfortable pour l'opérateur, mais peut aussi présenter des risques pour la sécurité, par exemple lorsque le véhicule de travail est entraîné en déplacement sur une pente raide.

Selon un mode de réalisation, le système de traction à transmission hydrostatique comporte en outre un réducteur mécanique à pluralité de rapports couplé audit pont de transmission, et dans lequel l'unité de commande est configurée pour activer le moteur électrique d'entraînement hydraulique du système de traction à transmission hydraulique en réponse à un changement de rapport du réducteur mécanique.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
**[****Fig. 1****]** La figure 1 est une vue en perspective d'un véhicule de travail selon un mode de réalisation (en position abaissée et rétractée du bras de levage télescopique).
**[****Fig. 2****]** La figure 2 est une vue en perspective d'un véhicule de travail selon un mode de réalisation (en position levée et déployée du bras de levage télescopique).
**[****Fig. 3****]** La figure 3 est une représentation schématique fonctionnel du véhicule de travail selon un mode de réalisation.
**[****Fig. 4****]** La figure 4 est une représentation schématique fonctionnelle du véhicule de travail selon un autre mode de réalisation.
**[****Fig. 5****]** La figure 5 est une représentation schématique du fonctionnelle de l'unité de commande selon un mode de réalisation.
**[****Fig. 6****]** La figure 6 est une représentation graphique de la variation de puissance délivrée par la chaîne cinématique d'un véhicule de travail selon un mode de réalisation en fonction du temps.
**[****Fig. 7****]** La figure 7 est une représentation graphique de l'effort de traction appliqué aux roues motrices en fonction de la vitesse de déplacement sur sol plat du véhicule de travail selon un mode de réalisation.

### Description des modes de réalisation

Les modes de réalisation ci-après sont décrits en relation avec un chariot électrique de manutention de charge à bras télescopique. Dans des variantes, le véhicule de travail 1 peut être un chariot à motorisation électrique tous terrains ou hors route, comme un chariot télescopique rotatif électrique, un chariot à mât vertical électrique ou encore une chargeuse compacte électrique.

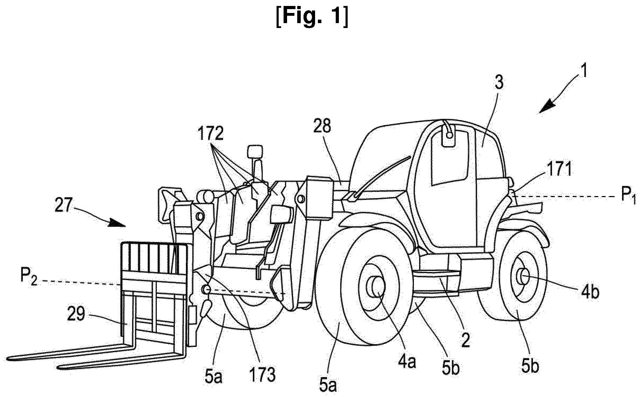

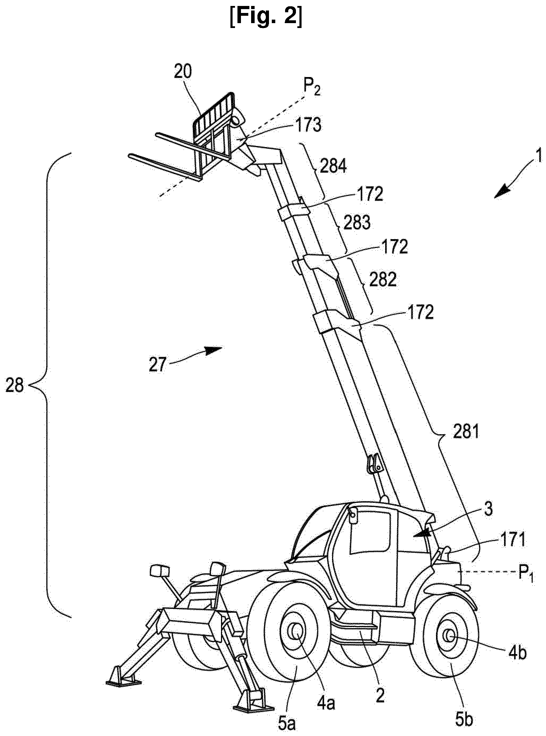

Un tel véhicule de travail 1, représentés sur les figures 1 et 2, comporte un châssis 2 surmonté d'une cabine de conduite 3 à l'intérieur de laquelle peut prendre place un opérateur. Le châssis 2 est équipé d'une structure d'engagement au sol comportant un premier pont de transmission 4a et un deuxième pont de transmission 4b, chacun des ponts de transmission 4a, 4b étant couplé à une paire de roues 5a, 5b. Par exemple, le premier pont de transmission 4a peut être un pont de transmission avant et le deuxième pont de transmission 4b peut être un pont de transmission arrière. L'entraînement en déplacement du véhicule de travail 1 est permis par la mise en rotation des roues motrices 5a, 5b en contact avec le sol.

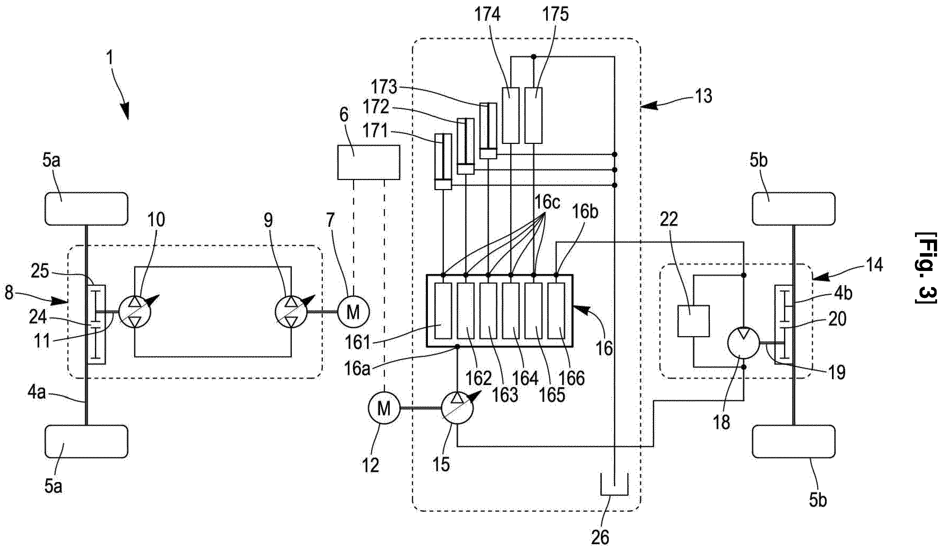

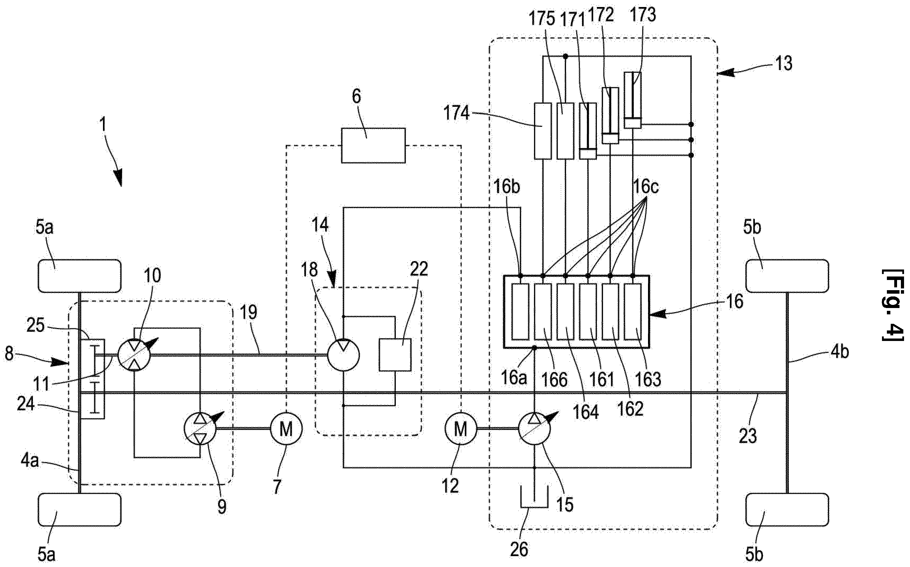

En référence aux figures 3 et 4, le véhicule de travail 1 comporte également une source d'énergie électrique 6 qui peut consister en un assemblage modulaire de batteries d'accumulateurs électrochimiques et/ou de condensateurs de stockage d'énergie.

Le véhicule de travail 1, comporte également un moteur électrique d'entraînement hydrostatique 7, alimenté par la source d'énergie électrique 6, et un système de traction à transmission hydrostatique 8.

Le système de traction à transmission hydrostatique 8 est constitué d'une pompe hydrostatique 9 entraînée par le moteur électrique d'entraînement hydrostatique 7, et d'un moteur hydrostatique 10 connecté à la pompe hydrostatique 9. La pompe hydrostatique 9 et le moteur hydrostatique 10 fonctionnent en circuit fermé. L'arbre de sortie 11 du moteur hydrostatique 10 est couplé à au moins un pont de transmission 4a, 4b pour permettre l'entraînement en rotation des roues motrices 5a, 5b du véhicule de travail 1.

Avantageusement, la pompe hydrostatique 9 et le moteur hydrostatique 10 sont à cylindrée variable contrôlée de manière hydraulique, hydromécanique ou électrique.

Avantageusement, l'effort de traction développé pour l'entraînement en déplacement du véhicule de travail 1 est principalement fourni par le système de traction à transmission hydrostatique 8. Autrement dit, le système de traction à transmission hydraulique 14 ci-après décrit est conçu pour assister, à titre auxiliaire, le système de traction à transmission hydrostatique 8 afin que le véhicule de travail 1 puisse développer l'effort de traction nécessaire à son entraînement en déplacement.

Le véhicule de travail 1 comporte également un moteur électrique d'entraînement hydraulique 12 alimenté par la source d'énergie électrique 6, un système hydraulique 13 et un système de traction à transmission hydraulique 14 connecté au système hydraulique 13.

Le système hydraulique 13 est constitué d'une pompe hydraulique 15 entraînée par un moteur électrique d'entraînement hydraulique 12, d'un boîtier de distribution hydraulique 16 connecté à la pompe hydraulique 15 et d'au moins un dispositif à commande hydraulique 171, 172, 173, 174, 175 alimenté en fluide hydraulique par le boîtier de distribution hydraulique 16. Avantageusement, le moteur électrique d'entraînement hydraulique 12 est dédié uniquement à l'entraînement de la pompe hydraulique 15. La vitesse de rotation du moteur électrique d'entraînement hydraulique 12 peut ainsi être accélérée ou ralentie pour ne faire varier que le débit du fluide hydraulique refoulé par la pompe hydraulique 15 afin de répondre au besoin en débit hydraulique du ou des dispositifs à commande hydraulique 171, 172, 173, 174, 175.

Selon un mode de réalisation préféré, la pompe hydraulique 15 est une pompe volumétrique à cylindrée réglable, par exemple une pompe hydraulique à pistons axiaux ou radiaux. En variante, la pompe hydraulique 15 peut être une pompe volumétrique à cylindrée fixe.

Le système de traction à transmission hydraulique 14 comporte un moteur hydraulique 18, alimenté en fluide hydraulique par le boîtier de distribution hydraulique 16. L'arbre de sortie 19 du moteur hydraulique 18 est couplé à au moins un pont de transmission 4a, 4b pour permettre l'entraînement en rotation des roues motrices 5a, 5b.

Lorsque le système de traction à transmission hydrostatique 8 n'est pas assisté par le système de traction à transmission hydraulique 14 pour répondre à un besoin de déplacement du véhicule de travail 1, le moteur hydraulique 18 n'est pas entraîné par le fluide hydraulique débité par la pompe hydraulique 15 mais, indirectement, par l'effet de la rotation des roues 5a, 5b en prise avec le système de traction à transmission hydraulique 14. Dans cette configuration, le moteur hydraulique 18, entraîné par son arbre de sortie 19, fonctionne comme une pompe hydraulique, ce qui crée un effet résistif à l'entraînement en déplacement du véhicule de travail 1 et risque d'endommager la transmission hydraulique.

Pour pallier ces écueils, le système de traction à transmission hydraulique 14 peut avantageusement comporter un embrayage 20 accouplé entre l'arbre de sortie 19 du moteur hydraulique 18 et le pont de transmission 4a, 4b, tel qu'illustré sur la figure 3. Ainsi, lorsque le moteur hydraulique 18 n'est pas entraîné en rotation par le fluide hydraulique débité par la pompe hydraulique 15, c'est-à-dire lorsque le système de traction à transmission hydraulique 14 n'est pas sollicité pour assister le système de traction à transmission hydrostatique 8, un débrayage permet le désaccouplement mécanique de l'arbre de sortie 19 du moteur hydraulique 18 et du pont de transmission 4a, 4b.

Le système de traction à transmission hydraulique 14 peut également comporter un dispositif de régulation de charge hydraulique 22, par exemple un limiteur de pression. En effet, lorsqu'un véhicule de travail 1 avance en butée contre une charge (pesante), il peut ne pas développer assez de puissance pour déplacer cette charge. Dans cette hypothèse, l'effort de traction est répercuté en besoin de couple à la pompe hydraulique 15. Pour éviter que le moteur électrique d'entraînement hydraulique 12 ne cale, le dispositif de régulation de charge hydraulique 22 vise alors à limiter le couple qui peut être demandé à la pompe hydraulique 15.

Le dispositif de régulation de charge hydraulique 22 peut consister en un dispositif de roue libre hydraulique permettant de découpler hydrauliquement le moteur hydraulique 18 de la pompe hydraulique 15, par exemple une vanne de dérivation configurée pour court-circuiter le moteur hydraulique 18.

Lorsque le moteur hydraulique 18 est à cylindrée variable, le dispositif de régulation de charge hydraulique 22 peut également être utilisé afin de réduire la cylindrée du moteur hydraulique 18.

Selon un mode de réalisation, en référence aux notations utilisées sur la figure 3, l'arbre de sortie 11 du moteur hydrostatique 10 du système de traction à transmission hydrostatique 8 est couplé à un premier pont de transmission 4a et l'arbre de sortie 19 du moteur hydraulique 18 du système de traction à transmission hydraulique 14 est couplé à un deuxième pont de transmission 4b. Les roues motrices 4a sont entraînées en rotation par le moteur hydrostatique 10 et les roues motrices 4b sont entraînées en rotation par le moteur hydraulique 18.

Selon un mode de réalisation, en référence aux notations utilisées sur la figure 4, le moteur hydrostatique 10 du système de traction à transmission hydrostatique 8 et le moteur hydraulique 17 du système de traction à transmission hydraulique 13 sont montés sur un même arbre de transmission 11, 19 couplé au pont de transmission 4a du véhicule de travail 1. Avantageusement, le pont de transmission 4a est mécaniquement couplé au pont de pont de transmission 4b par l'intermédiaire d'un joint de cardan 23.

Selon un mode de réalisation, le système de traction à transmission hydrostatique 8 comporte en outre un embrayage 24 et un réducteur mécanique 25 à pluralité de rapports, intercalés entre l'arbre de sortie 11 du moteur hydrostatique 10 et les roues motrices 5a, 5b d'un pont de transmission 4a, 4b. Pour maintenir une continuité de l'accélération du véhicule de travail 1, c'est-à-dire pour éviter les à-coups lors d'un changement de rapport du réducteur mécanique 25, la perte de couple du moteur hydrostatique 10 liée à l'ouverture de l'embrayage 24 est compensée par une augmentation du couple fourni par le moteur hydraulique 18.

En fonctionnement, la pompe hydraulique 15 aspire du fluide hydraulique stocké dans le réservoir hydraulique 26 à pression atmosphérique et le refoule sous pression vers le boîtier de distribution hydraulique 16. Le boîtier de distribution hydraulique 16 comporte un corps fixe percé d'un orifice d'admission 16a connecté à la pompe hydraulique 16, un orifice de raccordement 16b au moteur hydraulique 18, un ou des orifices de raccordement 16c au ou aux dispositifs à commande hydraulique 171, 172, 173, 174, 175, et un ensemble de distributeurs hydrauliques 161, 162, 163, 164, 165, 166. Chacun des distributeurs hydrauliques 161, 162, 163, 164, 165, 166 comporte un tiroir apte à coulisser dans un alésage du corps dudit distributeur hydraulique 161, 162, 163, 164, 165, 166. De façon connue, la position de chaque tiroir d'un distributeur hydraulique 161, 162, 163, 164, 165, 166 permet d'établir les connexions ou fermetures souhaitées des différents orifices 16a, 16b, 16c du corps du boîtier de distribution hydraulique 16. Avantageusement, chacun des distributeurs hydrauliques 161, 162, 163, 164, 165, 166 est un distributeur électrohydraulique à commande proportionnelle, actionné par solénoïde, configuré pour réguler le débit de fluide hydraulique refoulé par la pompe hydraulique 15. Ainsi, le boîtier de distribution hydraulique 16 répartit le débit de fluide hydraulique fourni par ladite pompe hydraulique 15 entre le moteur hydraulique 18 et le ou les dispositifs à commande hydraulique 171, 172, 173, 174, 175.

Selon un mode de réalisation, illustré sur les figures 1 à 4, le au moins un dispositif à commande hydraulique 171, 172, 173, 174, 175 du système hydraulique 13 comporte un dispositif de manutention de charge 27 incluant un bras de levage 28, porté par le châssis 2 du véhicule de travail 1. Le bras de levage 28 est monté à pivotement autour d'un axe de pivotement P₁, orthogonal à l'axe longitudinal dudit bras 28 et parallèle au plan d'appui au sol du véhicule de travail 1. Le bras de levage 28 est orientable autour de l'axe de pivotement P₁ entre une position basse et une position haute, par l'action d'un actionneur hydraulique de levage 171, tel qu'un vérin hydraulique, disposé entre le bras 28 et le châssis 2.

Le bras de levage 28 peut être un bras télescopique de longueur ajustable entre une position rentrée et une position sortie. À cet effet, le bras de levage 28 est formé d'une pluralité de sections de bras 281, 282, 283, 284, dont l'une 281 est montée à pivotement au châssis 2 et dont les autres 282, 283, 284 sont montées à emboîtement coulissant par rapport aux sections précédentes 281, 282, 283. Le déplacement à emboîtement coulissant entre les sections de bras 281, 282, 283, 284 peut être obtenu à l'aide d'actionneurs hydrauliques de télescopage 172, tels que des vérins double effet logés dans les sections de bras emboîtantes 281, 282, 283 et fixés par leur tige aux sections de bras emboîtées 282, 283, 284 pour permettre le déploiement ou le télescopage des sections de bras emboîtées 282, 283, 284 sous l'effet d'une rentrée ou d'une sortie des tiges desdits vérins hydrauliques. En variante, le bras de levage 28 peut ne pas être télescopique.

Le bras de levage 28, télescopique ou de longueur fixe, est équipé à son extrémité libre, c'est-à-dire à l'extrémité du bras opposée à celle montée à pivotement au châssis 2, d'un accessoire 29, tel qu'un porte-fourche, une benne ou un godet. L'accessoire 29 est entraîné en déplacement entre une position de cavage et une position de déversement par rotation autour d'un axe de pivotement P₂, orthogonal à l'axe longitudinal du bras 28 et parallèle au plan d'appui au sol du véhicule de travail 1, par un actionneur hydraulique rotatif de l'accessoire 173, tel qu'un vérin hydraulique double effet ou deux vérins parallèles simple effet alimentés tour à tour. L'actionneur hydraulique rotatif de l'accessoire 173 est disposé entre l'accessoire 29 et le bras de levage 28. L'entraînement en déplacement à pivotement de l'accessoire 29 s'opère ainsi autour d'un axe de pivotement P₂ parallèle à l'axe de pivotement P₁ du bras de levage 28.

Selon un mode de réalisation, illustré sur les figures 3 et 4, le au moins un dispositif à commande hydraulique du système hydraulique comporte un dispositif de direction hydraulique 174. Un tel dispositif peut être constitué d'un orbitrol de direction alimentant en fluide hydraulique un vérin hydraulique double effet, ou deux vérins hydrauliques simple effet, reliés aux roues gauche et droite 5a, 5b d'un pont de transmission 4a, 4b du véhicule de travail 1. Le dispositif de direction hydraulique 174 permet à l'opérateur de contrôler correctement le déplacement du véhicule de travail 1 en réduisant l'effort nécessaire au virage.

Selon un mode de réalisation, illustré sur les figures 3 et 4, le au moins un dispositif à commande hydraulique du système hydraulique 13 comporte un dispositif de freinage hydraulique 175. De préférence, le dispositif de freinage hydraulique 175 comporte un frein de stationnement à ressort à desserrage hydraulique, aussi appelé frein SAHR (pour *Spring-Applied Hydraulic Release).* Dans un dispositif de freinage SAHR, en l'absence de pression hydraulique, un ressort serre un frein à disque ou à tambour pour bloquer la rotation de la roue 5a, 5b, ce qui immobilise le véhicule de travail 1. À l'inverse, l'application d'une pression hydraulique permet de desserrer le frein pour libérer le mouvement rotatif de la roue 5a, 5b, ce qui permet un entraînement en déplacement sans entrave du véhicule de travail 1.

Le véhicule de travail 1 comporte encore une unité de commande 30 configurée pour contrôler le débit du fluide hydraulique refoulé par la pompe hydraulique 15 et pour piloter le boîtier de distribution hydraulique 16 afin de commander la répartition dudit débit de fluide hydraulique entre le ou les dispositifs à commande hydraulique 171, 172, 173, 174, 175 et le moteur hydraulique 18, en fonction du besoin de déplacement 31 et, le cas échéant, de la vitesse d'avancement 45 du véhicule de travail 1.

Le besoin de déplacement 31 peut être spécifié par l'opérateur au moyen d'une pédale d'accélérateur 32 installée dans la cabine de conduite 3 du véhicule de travail 1. La pédale d'accélérateur 32 est équipée d'un capteur de position 33. Par exemple, le capteur de position 33 est configuré pour mesurer le degré d'enfoncement de la pédale d'accélérateur 32, ou encore pour mesurer la pression exercée par l'opérateur sur la pédale d'accélérateur 32. Le capteur de position 33 est connecté par liaison filaire ou sans fil à l'unité de commande 30 à laquelle il transmet les données qu'il acquiert. L'unité de commande 30 corrèle les données de position de la pédale d'accélérateur 32 à un besoin de déplacement 31, par exemple un besoin de couple à appliquer aux roues 5a, 5b, un besoin de vitesse d'avancement du véhicule de travail 1 ou un besoin de puissance pour vaincre la résistance au déplacement du véhicule de travail 1.

Selon un mode de réalisation, l'unité de commande 30 est configurée pour piloter le boîter de distribution hydraulique 16 afin d'alimenter en fluide hydraulique le moteur hydraulique 18 lorsque le besoin de déplacement 31 du véhicule de travail 1 est supérieur à une première valeur seuil de besoin de déplacement SBD₁. Inversement, l'unité de commande 30 est configurée pour piloter le boîter de distribution hydraulique 16 afin de ne plus alimenter en fluide hydraulique ledit moteur hydraulique 18 lorsque le besoin de déplacement 31 du véhicule de travail 1 est inférieure à une deuxième valeur seuil de besoin en déplacement SBD₂.

Autrement dit, lorsque le système de traction à transmission hydrostatique 8 ne fournit pas assez de puissance pour répondre au besoin de déplacement 31 du véhicule de travail 1, par exemple parce que l'opérateur enfonce la pédale d'accélérateur 32, le système de traction à transmission hydraulique 14 est activé. À l'inverse, lorsque le système de traction à transmission hydrostatique 8 fournit de nouveau assez de puissance pour répondre au besoin en déplacement 31 du véhicule de travail 1, par exemple parce que l'opérateur a levé le pied de la pédale d'accélérateur 32, le système de traction à transmission hydraulique 14 est désactivé et seul le système de traction à transmission hydrostatique 8 entraîne en déplacement le véhicule de travail 1.

Avantageusement, la première valeur seuil de besoin de déplacement SBD₁ est supérieure ou égale à la deuxième valeur seuil de besoin de déplacement SBD₂. Cette hystérésis permet d'éviter de trop nombreuses activations et désactivations du système de traction à transmission hydraulique 14 lorsque le besoin de déplacement 31 du véhicule de travail 1 est au voisinage du seuil d'activation de l'assistance hydraulique à la traction, c'est-à-dire de la première valeur seuil de besoin de déplacement SBD₁.

Selon un mode de réalisation, l'unité de commande 30 détermine d'abord le besoin de débit de fluide hydraulique 35 du moteur hydraulique 18 à partir du besoin de déplacement 31 du véhicule de travail 1. En particulier, si le besoin de déplacement 31 est inférieur à la première valeur seuil de besoin de déplacement SBD₁, le besoin de débit de fluide hydraulique 35 du moteur hydraulique 18 est nul.

L'unité de commande 30 détermine ensuite le besoin de débit de fluide hydraulique 361, 362, 363, 364, 365 du ou de chacun des dispositifs à commande hydraulique 171, 172, 173, 174, 175.

Selon un mode de réalisation, le véhicule de travail 1 comporte un organe de commande 37 destiné à être actionné manuellement par un opérateur pour piloter le dispositif de manutention de charge 27. L'organe de commande 37, installé dans la cabine de conduite 3, est équipé d'au moins un capteur de position 381, 382 connecté par liaison filaire ou sans fil à l'unité de commande 30. La position de l'organe de commande 30 est déterminée par rapport à une position de référence, appelée position neutre, à laquelle l'organe de commande 37 est rappelé par un ressort. Les données de position acquises par le ou les capteurs de position 381, 382 de l'organe de commande 37 sont transmises à l'unité de commande 30. Ladite unité de commande 30 détermine le besoin de débit de fluide hydraulique 361, 362, 363 des actionneurs hydrauliques 171, 172, 173 du dispositif de manutention de charge 27 à partir de la mesure d'une position de l'organe de commande 37.

L'organe de commande 37 peut affecter un grand nombre de forme, comme un levier de commande ou un joystick. Par exemple, un tel levier de commande est monté en mobile par rapport à une position neutre et équipé d'un capteur de position 381 configuré pour repérer la position du levier de commande par rapport aux directions principales avant/arrière/gauche/droite. Le levier de commande est déplacé vers l'avant pour commander l'abaissement du bras de levage 28 et vers l'arrière pour commander la montée du bras de levage 28. Le mouvement directionnel avant/arrière commande ainsi le fonctionnement de l'actionneur hydraulique de levage 171. Le levier de commande est déplacé vers la gauche pour commander la position de cavage de l'accessoire 29 et vers la droite pour commander la position de déversement de l'accessoire 29. Le mouvement directionnel gauche/droite commande ainsi le fonctionnement de l'actionneur hydraulique rotatif de l'accessoire 173. Le levier de commande peut être entraîné suivant une direction quelconque correspondant à une action combinée proportionnellement à la position du levier de commande par rapport aux directions principales. Les données de position acquises par le capteur de position 381 peuvent être relatives à la position angulaire du levier de commande par rapport à sa position neutre.

Dans le cas d'un bras de levage 28 télescopique, le levier de commande comporte également une molette dont la rotation dans un sens ou dans l'autre permet le déploiement ou la rétractation dudit bras de levage 28. Le levier de commande est équipé d'un capteur de mouvement 382, par exemple un capteur à effet Hall, configuré pour détecter le sens de rotation de la molette. Le mouvement rotatif de la molette commande ainsi le fonctionnement des actionneurs hydrauliques de télescopage 172.

Dans cet exemple, l'unité de commande 30 détermine le besoin de débit de fluide hydraulique 361 de l'actionneur hydraulique de levage 171, le besoin de débit de fluide hydraulique 362 des actionneurs hydrauliques de télescopage 172 et le besoin de débit de fluide hydraulique 363 de l'actionneur hydraulique rotatif de l'accessoire 173 à partir de la position du levier de commande mesurée par le capteur de position 381 et par le capteur de mouvement 382. En particulier, lorsque ledit capteur de position 381 détecte une position neutre du levier de commande ou lorsque le capteur de mouvement 382 ne détecte aucun mouvement de rotation de la molette du levier de commande, le besoin de débit de fluide hydraulique 361, 362, 363 du ou des actionneurs hydrauliques correspondants 171, 172, 173 est nul.

Selon un mode de réalisation, le véhicule de travail 1 comporte également un capteur de direction 384, par exemple un volant directionnel associé soit à un capteur de position angulaire soit à un capteur de pression hydraulique, et un capteur de vitesse 34 configuré pour mesurer la vitesse d'avancement dudit véhicule de travail 1, connectés par liaison filaire ou sans fil à l'unité de commande 30. L'unité de commande 30 contrôle le débit de fluide hydraulique refoulé par la pompe hydraulique 15 pour que le dispositif de direction hydraulique 174 soit pleinement alimenté en fluide hydraulique lorsque l'opérateur exprime un besoin de direction, par exemple en tournant le volant directionnel, ou lorsque le véhicule de travail 1 est entraîné en déplacement par rapport au sol.

En particulier, lorsque la vitesse d'avancement 45 du véhicule de travail 1 est non nulle, un débit de fluide hydraulique est immédiatement disponible afin de permettre au dispositif de direction hydraulique 174 de répondre au besoin de direction spécifié par l'opérateur. Inversement, le besoin de débit de fluide hydraulique 364 du dispositif de direction hydraulique 174 est nul lorsque l'opérateur n'exprime aucun besoin de direction et que le véhicule de travail 1 est à l'arrêt.

Selon un mode de réalisation, le véhicule de travail 1 comporte également un capteur de freinage 385, par exemple une pédale de frein installée dans la cabine de conduite 3, connecté par liaison filaire ou sans fil à l'unité de commande 30. L'unité de commande 30 contrôle le débit de fluide hydraulique refoulé par la pompe hydraulique 15 pour que le dispositif de direction freinage hydraulique 175 soit pleinement alimenté en fluide hydraulique lorsque l'opérateur exprime un besoin de freinage, par exemple en enfonçant la pédale de frein, ou lorsque le véhicule de travail 1 est entraîné en déplacement par rapport au sol.

En particulier, lorsque la vitesse d'avancement 45 du véhicule de travail 1 est non nulle, un débit de fluide hydraulique est immédiatement disponible afin de permettre au dispositif de freinage hydraulique 175 de répondre au besoin de freinage spécifié par l'opérateur. Inversement, le besoin de débit de fluide hydraulique 365 du dispositif de freinage hydraulique 175 est nul lorsque l'opérateur n'exprime aucun besoin de freinage et que le véhicule de travail 1 est à l'arrêt.

L'unité de commande 30 détermine une valeur de consigne de débit de fluide hydraulique 39 de la pompe hydraulique 15 en comparant une somme 36 des besoins de débit de fluide hydraulique 361, 362, 363, 364, 365 du ou de chacun des dispositifs à commande hydraulique 171, 172, 173, 174, 175 et d'un besoin de débit de fluide hydraulique 35 du moteur hydraulique 18 avec le débit de fluide hydraulique maximal DPₘₐₓ de la pompe hydraulique 15. La valeur de consigne de débit de fluide hydraulique 39 de ladite pompe hydraulique 15 correspond à la plus petite des valeurs comparées.

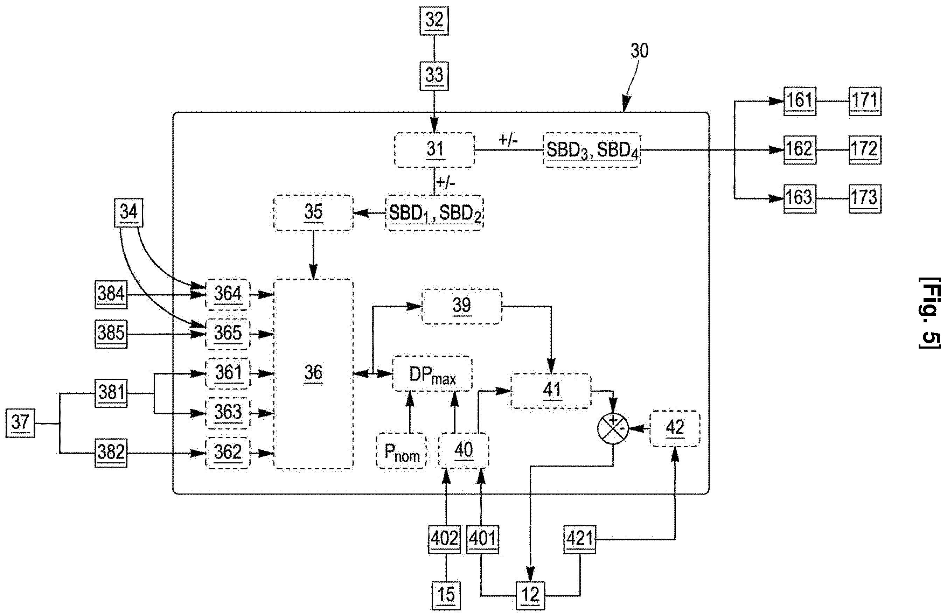

Dans l'exemple précité illustré sur la figure 5, l'unité de commande 30 somme les besoins de débit de fluide hydraulique 35, 361, 362, 363, 364, 365 du moteur hydraulique 18, de l'actionneur hydraulique de levage 171, des actionneurs hydrauliques de télescopage 172, de l'actionneur hydraulique rotatif de l'accessoire 173, du dispositif de direction hydraulique 174 et du dispositif de freinage hydraulique 175. Puis l'unité de commande 30 compare la somme 36 des besoins de débit de fluide hydraulique 35, 361, 362, 363, 364, 365 avec le débit de fluide hydraulique maximal DPₘₐₓ de la pompe hydraulique 15. Si ladite somme 36 est inférieure au débit de fluide hydraulique maximal DPₘₐₓ de la pompe hydraulique 15 alors la valeur de consigne de débit de fluide hydraulique 39 de ladite pompe hydraulique 15 est choisie égale à la valeur de la somme 36 des besoins en débit de fluide hydraulique 35, 361, 362, 363, 364, 365. En revanche, si ladite somme 36 est supérieure au débit de fluide hydraulique maximal DPₘₐₓ de la pompe hydraulique 15, la valeur de consigne de débit de fluide hydraulique 39 de ladite pompe hydraulique 15 est choisie égale au débit de fluide hydraulique maximal DPₘₐₓ de la pompe hydraulique 15.

Le débit de fluide hydraulique maximal DPₘₐₓ de la pompe hydraulique 15 est fonction de sa puissance hydraulique maximale ou puissance nominale Pₙₒₘ, donnée par le constructeur, et de la cylindrée 40 de ladite pompe hydraulique 15.

Selon un mode de réalisation, dans le cas où la pompe hydraulique 15 est une pompe volumétrique à cylindrée réglable, le véhicule de travail 1 comporte un capteur de couple 401 configuré pour mesurer un couple du moteur électrique d'entraînement hydraulique 12 et un capteur de pression 402 configuré pour mesurer une pression de service du fluide hydraulique refoulé par la pompe hydraulique 15. Le capteur de couple 401 et le capteur de pression 402 sont connectés par liaison filaire ou sans fil à l'unité de commande 30. Les données de couple et de pression acquises par lesdits capteurs 401, 402 sont transmises à l'unité de commande 30. L'unité de commande 30 détermine la cylindrée 40 de la pompe hydraulique 15 à partir d'une mesure du couple du moteur électrique d'entraînement hydraulique 12 et d'une mesure de pression de service du fluide hydraulique refoulé par la pompe hydraulique 15.

L'unité de commande 30 détermine une valeur de consigne de vitesse de rotation 41 du moteur électrique d'entraînement hydraulique 12 à partir de la consigne de vitesse de débit de fluide hydraulique 39 de la pompe hydraulique 15 et de la cylindrée 40 de ladite pompe hydraulique 15.

Enfin, l'unité de commande 30 asservit la vitesse de rotation mesurée 42 du moteur électrique d'entraînement hydraulique 12 à la valeur de consigne de vitesse de rotation 41 du moteur électrique d'entraînement hydraulique 12. Pour ce faire, un capteur de vitesse 421, connecté par liaison filaire ou sans fil à l'unité de commande 30, est configuré pour mesurer la vitesse de rotation 42 du moteur électrique d'entraînement hydraulique 12. L'unité de commande 30 calcule l'écart entre la vitesse de rotation 42 mesurée et la valeur de consigne de vitesse de rotation 41 du moteur électrique d'entraînement hydraulique 12, puis commande l'entraînement en rotation dudit moteur électrique d'entraînement hydraulique 12 afin de réduire cet écart le plus rapidement possible.

La direction hydraulique 174 et le dispositif de freinage hydraulique 175 sont des composantes du système hydraulique 13 plus critiques pour la sécurité que l'actionnement de bras de levage 28 ou l'activation d'une assistance hydraulique à la traction pour répondre à un besoin de déplacement 31 du véhicule de travail 1.

Selon un mode de réalisation, le boîtier de distribution hydraulique 16 est configuré pour alimenter le dispositif de direction hydraulique 174 en priorité par rapport au moteur hydraulique 18 et aux dispositifs à commande hydraulique 171, 172, 173 autres que le dispositif de freinage hydraulique 175, lorsque la somme 36 des besoins de débit de fluide hydraulique 361, 362, 363, 364, 365 de chacun des dispositifs à commande hydraulique 171, 172, 173, 174, 175 et d'un besoin de débit de fluide hydraulique 35 du moteur hydraulique 18 est supérieure au débit de fluide hydraulique maximal DPₘₐₓ de la pompe hydraulique 15.

Selon un mode de réalisation, le boîtier de distribution hydraulique 16 est configuré pour alimenter le dispositif de freinage hydraulique 175 en priorité par rapport au moteur hydraulique 18 et aux dispositifs à commande hydraulique 171, 172, 173 autres que le dispositif de direction hydraulique 174, lorsque la somme 36 des besoins de débit de fluide hydraulique 361, 362, 363, 364, 365 de chacun des dispositifs à commande hydraulique 171, 172, 173, 174, 175 et d'un besoin de débit de fluide hydraulique 35 du moteur hydraulique 18 est supérieure au débit de fluide hydraulique maximal DPₘₐₓ de la pompe hydraulique 15.

Pour prioriser l'alimentation en fluide hydraulique du dispositif de direction hydraulique 174 et du dispositif de freinage hydraulique 175, le boîtier de distribution hydraulique 16 peut comporter une valve de priorité (non représentée), par exemple une valve à tiroir proportionnel à rappel par ressort et pilotage hydraulique, en amont des distributeurs hydrauliques 161, 162, 163, 164, 165, 166. Ainsi, lorsque la pompe hydraulique 15 ne débite pas assez de fluide hydraulique pour répondre au besoin de débit de fluide hydraulique 36 de l'ensemble des dispositifs à commande hydraulique 171, 172, 173, 174, 175, le dispositif de direction hydraulique 174 et le dispositif de freinage hydraulique 175 sont pleinement alimentés en fluide hydraulique, le surplus de débit de fluide hydraulique étant distribué, selon les besoins, entre les actionneurs hydrauliques 171, 172, 173 du dispositif de manutention de charge 27 et le moteur hydraulique 18.

Selon un mode de réalisation, lorsque le besoin de déplacement 31 du véhicule de travail 1 est supérieur à une troisième valeur seuil de besoin de déplacement SBD₃, l'unité de commande 30 pilote le boîtier de distribution hydraulique 16 afin de ne pas alimenter en fluide hydraulique les actionneurs hydrauliques 171, 172, 173 du dispositif de manutention de charge 28. Inversement, lorsque le besoin de déplacement 31 du véhicule de travail 1 est inférieur à une quatrième valeur seuil de besoin de déplacement SBD₄, l'unité de commande 30 pilote le boîtier de distribution hydraulique 16 afin d'alimenter en fluide hydraulique lesdits actionneurs hydrauliques 171, 172, 173 du dispositif de manutention de charge 28.

Autrement dit, lorsque, compte tenu de la consommation des dispositifs à commande hydraulique 171, 172, 173, 174, 175, le système de traction à transmission hydrostatique 8 assisté par le système de traction à transmission hydraulique 14 ne développe pas assez de puissance pour répondre à un besoin de déplacement 31 du véhicule de travail 1, un délestage des actionneurs hydrauliques 171, 172, 173 du dispositif de manutention de charge 27 peut être réalisé. Le délestage permet de prioriser l'alimentation en fluide hydraulique du moteur hydraulique 18 par rapport aux dispositifs à commande hydraulique 171, 172, 173 du système hydraulique 13 non critiques pour la sécurité.

Avantageusement, la troisième valeur seuil de besoin de déplacement SBD₃ est supérieure ou égale à la quatrième valeur seuil de besoin de déplacement SBD₄. Cette hystérésis permet d'éviter de trop nombreuses désactivations et activations du dispositif de manutention de charge 27, lorsque le besoin de déplacement 31 du véhicule de travail 1 est au voisinage du seuil de délestage, c'est-à-dire de la troisième valeur seuil de besoin de déplacement SBD₃.

Avantageusement, les valeurs seuils de besoin de déplacement sont ordonnés selon SBD₂ ≤ SBD₁ ≤ SBD₄ ≤ SBD₃.

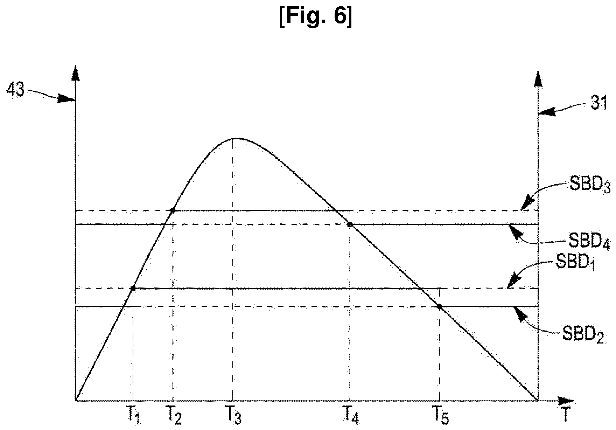

La figure 6 illustre un profil de variation de la puissance 43 délivrée par la chaîne cinématique d'un véhicule de travail 1 en fonction du temps T.

Sur cet exemple, l'opérateur enfonce la pédale d'accélérateur 32 jusqu'à l'instant T₃. Le système de traction à transmission hydrostatique 8 entraîne en déplacement le véhicule de travail 1, d'abord seul (besoin de déplacement 31 < SBD₁), puis, à partir de l'instant T₁, assisté par le système de traction à transmission hydraulique 14 (besoin de déplacement 31 ≥ SBD₁). À l'instant T₂, pour pouvoir renforcer l'assistance à la traction hydrostatique, le système hydraulique 13 se déleste des actionneurs hydrauliques 171, 172, 173 du dispositif de manutention de charge 27 et l'unité de commande 30 dirige la puissance ainsi libérée vers le système de traction à transmission hydraulique 14 (besoin de déplacement 31 ≥ SBD₃).

À partir de l'instant T₃, l'opérateur relâche la pédale d'accélérateur 32 et le besoin de puissance diminue. À l'instant T₄, le surplus de puissance obtenu par le délestage des organes de manutention n'est plus nécessaire pour permettre l'entraînement en déplacement du véhicule de travail 1 et le dispositif de manutention de charge 27 est réactivé (besoin de déplacement 31 ≤ SBD₄). À l'instant T₅, la traction hydrostatique suffit seule à répondre au besoin de déplacement 31 et le système de traction à transmission hydraulique 14 est désactivé (besoin de déplacement 31 ≤ SBD₂).

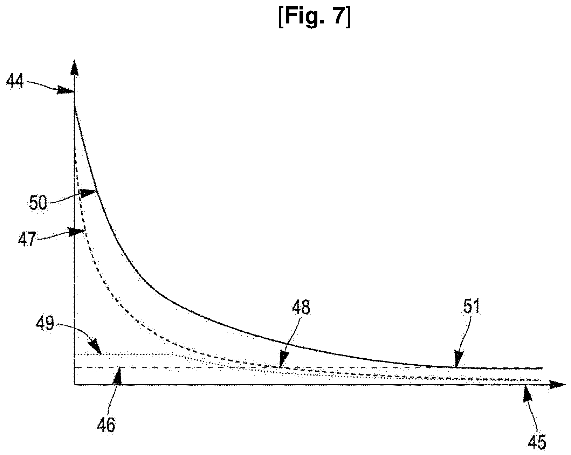

La figure 7 présente l'effort de traction 44 appliqué aux roues motrices 5a, 5b en fonction de la vitesse d'avancement 45 du véhicule de travail 1 sur sol plat, selon que le système de traction à transmission hydrostatique 8 est assisté ou non du système de traction à transmission hydraulique 14.

La courbe 46, constante, représente à l'effort de traction nécessaire pour entraîner en déplacement le véhicule de travail 1 sur sol plat. La courbe 47 représente l'effort de traction qui peut être fourni par le système de traction à transmission hydrostatique 8. Cet effort décroit en fonction de la vitesse d'avancement 45. Le point d'intersection des courbes 46 et 47 définit la vitesse maximale d'avancement 48 du véhicule de travail 1 lorsqu'il est entraîné en déplacement par le seul système de traction à transmission hydrostatique 8.

La courbe 49 représente l'effort de traction qui peut être fourni par le système de traction à transmission hydraulique 14. Cet effort décroit en fonction de la vitesse d'avancement 45. La courbe 50 représente l'effort de traction appliqué aux roues motrices 5a, 5b lorsque le système de traction à transmission hydrostatique 8 est assisté par le système de traction à transmission hydraulique 14, soit le cumul de l'effort de traction délivré par le système de traction à transmission hydrostatique 8 (courbe 47) et de l'effort de traction délivré par le système de traction à transmission hydraulique 14 (courbe 49). Le point d'intersection des courbes 46 et 50 définit la vitesse d'avancement maximale 51 du véhicule de travail 1 lorsqu'il est entraîné en déplacement par le système de traction à transmission hydrostatique 8 assisté par le système de traction à transmission hydraulique 14.

Pour un exemple de dimensionnement, un véhicule de travail 1 d'une masse de 12 tonnes équipé de roues motrices 5a, 5b d'un rayon de 0,57 m entraînées en rotation par un système de traction à transmission hydrostatique 8 fonctionnant sous une pression de service de 420 bars, constitué d'une pompe hydrostatique 9 de cylindrée 56 cm³/tr, connecté à un moteur hydrostatique 10 de cylindrée 85 cm³/tr, peut atteindre, sur sol plat, une vitesse d'avancement maximale 48 de l'ordre de 20 km/h. En revanche, si le système de traction à transmission hydrostatique 8, tel que décrit, est assisté par un système de traction à transmission hydraulique 13 fonctionnant sous une pression de service de 270 bars constitué d'une pompe hydraulique 14 de cylindrée 63 cm³/tr connecté à un moteur hydraulique 17 de cylindrée 45 cm³/tr, le véhicule de travail 1 peut atteindre, sur sol plat, une vitesse d'avancement maximale 51 de près de 40 km/h.

Certains des éléments représentés, notamment l'unité de commande 30, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, lequel est défini par les revendications.

## Revendications

1. Véhicule de travail (1) comportant :
- une source d'énergie électrique (6),
- un moteur électrique d'entraînement hydrostatique (7) alimenté en énergie électrique par la source d'énergie électrique (6),
- un moteur électrique d'entraînement hydraulique (12) alimenté en énergie électrique par la source d'énergie électrique (6),
- au moins un pont de transmission (4a, 4b) équipé de roues motrices (5a, 5b),
- au moins un capteur de besoin de déplacement (34) configuré pour mesurer un besoin de déplacement (31) du véhicule de travail (1),
- un système de traction à transmission hydrostatique (8) comportant une pompe hydrostatique (9) entraînée par le moteur électrique d'entraînement hydrostatique (7), et un moteur hydrostatique (10) connecté à la pompe hydrostatique (9), le moteur hydrostatique (10) permettant l'entraînement en rotation des roues motrices (5a, 5b) d'un dit pont de transmission (4a, 4b),
- un système hydraulique (13) comportant une pompe hydraulique (15) entraînée par le moteur électrique d'entraînement hydraulique (12), un boîtier de distribution hydraulique (16) connecté à la pompe hydraulique (15) et au moins un dispositif à commande hydraulique (171, 172, 173, 174, 175), le au moins un dispositif à commande hydraulique (171, 172, 173, 174, 175) étant alimenté en fluide hydraulique par le boîtier de distribution hydraulique (16),
- un système de traction à transmission hydraulique (14) comportant un moteur hydraulique (18) alimenté par le boîtier de distribution hydraulique (16), le moteur hydraulique (18) permettant l'entraînement en rotation des roues motrices (5a, 5b) d'un dit pont de transmission (4a, 4b), et
- une unité de commande (30) configurée pour contrôler, en fonction du besoin de déplacement (34) du véhicule de travail (1), un débit de fluide hydraulique fourni par la pompe hydraulique (15), et pour contrôler le boîtier de distribution hydraulique (16) de manière à répartir le débit de fluide hydraulique fourni par ladite pompe hydraulique (15) entre le ou les dispositifs à commande hydraulique (171, 172, 173, 174, 175) et le moteur hydraulique (18),
**caractérisé en ce que** l'unité de commande (30) est configurée pour déclencher l'entraînement du moteur hydraulique (18) lorsque le besoin de déplacement (31) du véhicule de travail (1) est supérieur à une première valeur seuil de besoin de déplacement (SBD₁), et pour arrêter l'entraînement dudit moteur hydraulique (18) lorsque le besoin de déplacement (31) du véhicule de travail (1) est inférieur à une deuxième valeur seuil de besoin de déplacement (SBD₂).

2. Véhicule de travail (1) selon la revendication 1, comportant au moins deux ponts de transmission (4a, 4b), chaque pont de transmission (4a, 4b) étant équipé de roues motrices (5a, 5b), et dans lequel le moteur hydrostatique (10) du système de traction à transmission hydrostatique (8) est couplé à un premier pont de transmission (4a, 4b), et dans lequel le moteur hydraulique (18) du système de traction à transmission hydraulique (14) est couplé à un deuxième pont de transmission (4a, 4b).

3. Véhicule de travail (1) selon la revendication 1, dans lequel le moteur hydrostatique (10) du système de traction à transmission hydrostatique (8) et le moteur hydraulique (18) du système de traction à transmission hydraulique (14) sont couplés à un même pont de transmission (4a, 4b).

4. Véhicule de travail (1) selon l'une quelconque des revendications précédentes, comportant en outre un capteur de vitesse de rotation (421) configuré pour mesurer une vitesse de rotation (42) du moteur électrique d'entraînement hydraulique (12),
et dans lequel l'unité de commande (30) est configurée pour :
- déterminer un besoin de débit de fluide hydraulique (35) du moteur hydraulique (18), à partir du besoin de déplacement (31) du véhicule de travail (1),
- déterminer une valeur de consigne de débit de fluide hydraulique (39) de la pompe hydraulique (15) en comparant une somme 36 des besoins en débit de fluide hydraulique du ou de chacun des dispositifs à commande hydraulique (361, 362, 363, 364, 365) et d'un besoin de débit de fluide hydraulique 35 du moteur hydraulique (18) avec le débit de fluide hydraulique maximal (DPₘₐₓ) de la pompe hydraulique (15), la valeur de consigne de débit de fluide hydraulique (39) de ladite pompe hydraulique (15) correspondant à la plus petite des valeurs comparées,
- déterminer une valeur de consigne de vitesse de rotation (41) du moteur électrique d'entraînement hydraulique (12) à partir de la valeur de consigne de débit de fluide hydraulique (39) de la pompe hydraulique (15) et
d'une cylindrée (40) de ladite pompe hydraulique (15), et
- asservir la valeur mesurée de la vitesse de rotation (42) du moteur électrique d'entraînement hydraulique (12) à la valeur de consigne de vitesse de rotation (41) du moteur électrique d'entraînement hydraulique (12).

5. Véhicule de travail (1) selon la revendication 4,
comportant en outre :
- un capteur de couple (401) configuré pour mesurer un couple du moteur électrique d'entraînement hydraulique (12), et
- un capteur de pression (402) configuré pour mesurer une pression de service du fluide hydraulique refoulé par la pompe hydraulique (15),
et dans lequel :
- ladite pompe hydraulique (15) présente une cylindrée (40) réglable, et
- l'unité de commande (30) est configurée pour déterminer la cylindrée (40) de ladite pompe hydraulique (15) à partir d'une mesure du couple du moteur électrique d'entrainement hydraulique (12) et d'une mesure de la pression de service du fluide hydraulique refoulé par la pompe hydraulique (15).

6. Véhicule de travail (1) selon l'une quelconques des revendications précédentes, dans lequel ledit au moins un dispositif à commande hydraulique comporte un dispositif de direction hydraulique (174).

7. Véhicule de travail (1) selon la revendication 4 prise en combinaison avec la revendication 6, comportant au moins un capteur de vitesse d'avancement (34) configuré pour mesurer une vitesse d'avancement (45) du véhicule de travail (1) et un capteur de direction (384) configuré pour mesurer un besoin de direction, et dans lequel l'unité de commande (30) contrôle le débit du fluide hydraulique refoulé par la pompe hydraulique (15) et contrôle le boîtier de distribution hydraulique (16) de manière à alimenter le dispositif de direction hydraulique (174) lorsqu'il existe un besoin de direction ou lorsque la vitesse d'avancement (45) dudit véhicule de travail (1) est non nulle.

8. Véhicule de travail (1) selon la revendication 4 prise en combinaison avec la revendication 7 ou selon la revendication 7, dans lequel le boîtier de distribution hydraulique (16) est configuré pour alimenter en fluide hydraulique le dispositif de direction hydraulique (174) prioritairement par rapport au moteur hydraulique (18) et, le cas échéant, à un autre dit dispositif à commande hydraulique (171, 172, 173, 175), lorsque la somme (36) des besoins de débit de fluide hydraulique (35, 361, 362, 363, 364, 365) du moteur hydraulique (18), du dispositif de direction hydraulique (174) et, le cas échéant, de l'autre ou de chacun des autres dispositifs à commande hydraulique (171, 172, 173, 175) est supérieure au débit de fluide hydraulique maximal (DPₘₐₓ) de la pompe hydraulique (15).

9. Véhicule de travail (1) selon l'une quelconque des revendications précédentes, dans lequel le au moins un dispositif à commande hydraulique comporte un dispositif de freinage hydraulique (175).

10. Véhicule de travail (1) selon la revendication 4 prise en combinaison avec la revendication 9, comportant au moins un capteur de vitesse d'avancement (34) configuré pour mesurer une vitesse d'avancement (45) du véhicule de travail (1) et un capteur de freinage (385) configuré pour mesurer un besoin de freinage, et dans lequel l'unité de commande (30) contrôle le débit du fluide hydraulique refoulé par la pompe hydraulique (15) et contrôle le boîtier de distribution hydraulique (16) de manière à alimenter le dispositif de freinage hydraulique (175) lorsqu'il existe un besoin de freinage ou lorsque la vitesse d'avancement (45) dudit véhicule de travail (1) est non nulle.

11. Véhicule de travail (1) selon la revendication 4 prise en combinaison avec la revendication 9 ou selon la revendication 10, dans lequel le boîtier de distribution hydraulique (16) est configuré pour alimenter en fluide hydraulique le dispositif de freinage hydraulique (175) prioritairement par rapport au moteur hydraulique (18) et, le cas échéant, à un autre dit dispositif à commande hydraulique (171, 172, 173, 174), lorsque la somme (36) des besoins de débit de fluide hydraulique (35, 361, 362, 363, 364, 365) du moteur hydraulique (18), du dispositif de freinage hydraulique (175) et, le cas échéant, de l'autre ou de chacun des autres dispositifs à commande hydraulique (171, 172, 173, 174) est supérieure au débit de fluide hydraulique maximal (DPₘₐₓ) de la pompe hydraulique (15).

12. Véhicule de travail (1) selon l'une quelconque des revendications précédentes, comportant en outre un dispositif de manutention de charge (27) et dans lequel le au moins un dispositif à commande hydraulique comporte au moins un actionneur hydraulique (171, 172, 173) pour actionner le dispositif de manutention de charge (27).

13. Véhicule de travail (1) selon la revendication 12, dans lequel l'unité de commande (30) est configurée pour piloter le boîtier de distribution hydraulique (16) afin de ne pas alimenter en débit de fluide hydraulique le ou les actionneurs hydrauliques (171, 172, 173) du dispositif de manutention de charge (27) lorsqu'un besoin de déplacement (31) dudit véhicule de travail (1) est supérieur à une troisième valeur seuil de besoin de déplacement (SBD₃), et pour alimenter en débit de fluide hydraulique le ou les actionneurs hydrauliques (171, 172, 173) du dispositif de manutention de charge (27) lorsqu'un besoin de déplacement (31) dudit véhicule de travail (1) est inférieur à une quatrième valeur seuil de besoin de déplacement (SBD₄).

14. Véhicule de travail (1) selon la revendication 12 ou 13,
comportant en outre :
- un organe de commande (37) destiné à être actionné par un opérateur pour piloter le dispositif de manutention de charge (27),
- au moins un capteur de position (381, 382) configuré pour mesurer une position de l'organe de commande (37),
et dans lequel l'unité de commande (30) est configurée pour déterminer un besoin de débit de fluide hydraulique (361, 362, 363) du ou de chaque actionneur hydraulique (171, 172, 173) du dispositif de manutention de charge (27) à partir de la mesure de position de l'organe de commande (37).

15. Véhicule de travail (1) selon l'une quelconque des revendications précédentes, dans lequel le système de traction à transmission hydrostatique (8) comporte en outre un réducteur mécanique (25) à pluralité de rapports couplé audit pont de transmission (4a, 4b), et dans lequel l'unité de commande (30) est configurée pour activer le moteur hydraulique (18) du système de traction à transmission hydraulique (14) en réponse à un changement de rapport du réducteur mécanique (25).

## Patentansprüche

1. Nutzfahrzeug (1), umfassend:
- eine elektrische Energiequelle (6),
- einen hydrostatischen Elektromotor (7), der von der elektrischen Energiequelle (6) mit elektrischer Energie versorgt wird,
- einen hydraulischen Elektromotor (12), der von der elektrischen Energiequelle (6) mit elektrischer Energie versorgt wird,
- mindestens eine Antriebsachse (4a, 4b) mit Antriebsrädern (5a, 5b),
- mindestens einen Fahrbedarfssensor (34), der so konfiguriert ist, dass er einen Fahrbedarf (31) des Nutzfahrzeugs (1) misst,
- ein hydrostatisches Antriebssystem (8) umfassend eine hydrostatische Pumpe (9), die vom hydrostatischen Elektromotor (7) angetrieben wird, und einen hydrostatischen Motor (10), der mit der hydrostatischen Pumpe (9) verbunden ist, wobei der hydrostatische Motor (10) den Drehantrieb der Antriebsräder (5a, 5b) einer sogenannten Antriebsachse (4a, 4b) ermöglicht,
- ein Hydrauliksystem (13) umfassend eine vom elektrischen Hydraulikantriebsmotor (12) angetriebene Hydraulikpumpe (15), ein mit der Hydraulikpumpe (15) verbundenes Hydraulikverteilergehäuse (16) und mindestens eine hydraulisch betätigte Vorrichtung (171, 172, 173, 174, 175), wobei die mindestens eine hydraulisch betätigte Vorrichtung (17 1, 172, 173, 174 , 175) vom Hydraulikverteilergehäuse (16) mit Hydraulikflüssigkeit versorgt wird,
- ein hydraulisches Antriebssystem (14), umfassend einen Hydraulikmotor (18), der vom Hydraulikverteilergehäuse (16) gespeist wird, wobei der Hydraulikmotor (18) den Antrieb der Antriebsräder (5a, 5b) einer der Antriebsachsen (4a, 4b) ermöglicht, und
- eine Steuereinheit (30), die konfiguriert ist, um in Abhängigkeit vom Bewegungsbedarf (34) des Nutzfahrzeugs (1) einen von der Hydraulikpumpe (15) zur Verfügung gestellten Hydraulikflüssigkeitsstrom zu steuern und um das Hydraulikverteilungsgehäuse (16) zu steuern, so dass der von der Hydraulikpumpe (15) zur Verfügung gestellte Hydraulikflüssigkeitsstrom auf die hydraulisch gesteuerte(n) Vorrichtung(en) (171, 172, 173, 174, 175) und den Hydraulikmotor (18) verteilbar ist,
**dadurch gekennzeichnet, dass** die Steuereinheit (30) konfiguriert ist, um den Antrieb des Hydraulikmotors (18) zu starten, wenn der Bewegungsbedarf (31) des Nutzfahrzeugs (1) größer als ein erster Schwellenwert für den Bewegungsbedarf (SBD1) ist, und um den Antrieb des Hydraulikmotors (18) zu stoppen, wenn der Bewegungsbedarf (31) des Nutzfahrzeugs (1) unter einem zweiten Schwellenwert für den Bewegungsbedarf (SBD2) liegt.

2. Nutzfahrzeug (1) gemäß Anspruch 1, das mindestens zwei Antriebsachsen (4a, 4b) umfasst, wobei jede Antriebsachse (4a, 4b) mit Matrixrädern (5a, S5) ausgestattet ist und wobei der hydrostatische Motor (10) des hydrostatischen Antriebssystems (8) mit einer ersten Antriebsachse (4a, 4b) gekoppelt ist und wobei der hydraulische Motor (18) des hydraulischen Antriebssystems (14) mit einer zweiten Antriebsachse (4a, 4b) gekoppelt ist.

3. Nutzfahrzeug (1) gemäß Anspruch 1, wobei der hydrostatische Motor (10) des hydrostatischen Antriebssystems (8) und der Hydraulikmotor (18) des hydraulischen Antriebssystems (14) mit derselben Antriebsachse (4a, 4b) gekoppelt sind.

4. Nutzfahrzeug (1) gemäß einem der vorstehenden Ansprüche, das weiterhin einen Drehzahlsensor (421) umfasst, der so konfiguriert ist, dass er eine Drehzahl (42) des hydraulischen Elektromotors (12) misst, und wobei die Steuereinheit (30) so konfiguriert ist, dass sie:
- einen Hydraulikflüssigkeitsstrombedarf (35) des Hydraulikmotors (18) aus dem Bewegungsbedarf (31) des Nutzfahrzeugs (1) bestimmt,
- einen Sollwert für den Hydraulikflüssigkeitsstrom (39) der Hydraulikpumpe (15) durch Vergleichen einer Summe 36 des Hydraulikflüssigkeitsstrombedarfs der oder jeder der hydraulisch betätigten Vorrichtungen (361, 362, 363, 364, 365) und eines Hydraulikflüssigkeitsstrombedarfes 35 des Hydraulikmotors (18) mit dem maximalen Hydraulikflüssigkeitsstrom (DPmax) der Hydraulikpumpe (15), wobei der Sollwert des Hydraulikflüssigkeitsstroms (39) der Hydraulikpumpe (15) dem kleinsten der verglichenen Werte entspricht,
- einen Drehzahlsollwert (41) des hydraulischen Elektromotors (12) aus dem Hydraulikflüssigkeitsstromsollwert (39) der Hydraulikpumpe (15) und einem Hubraum (40) der Hydraulikpumpe (15) bestimmt, und
- den gemessenen Wert der Drehzahl (42) des hydraulischen Elektromotors (12) an den Drehzahlsollwert (41) des hydraulischen Elektromotors (12) anpasst.

5. Nutzfahrzeug (1) gemäß Anspruch 4, das weiterhin umfasst:
- einen Drehmomentsensor (401), der so konfiguriert ist, dass er ein Drehmoment des hydraulischen Elektromotors (12) misst, und
- einen Drucksensor (402), der zum Messen eines Betriebsdrucks der von der Hydraulikpumpe (15) geförderten Hydraulikflüssigkeit konfiguriert ist,und wobei:
- die Hydraulikpumpe (15) einen einstellbaren Hubraum (40) aufweist, und
- die Steuereinheit (30) so konfiguriert ist, dass sie den Hubraum (40) der Hydraulikpumpe (15) anhand einer Messung des Drehmoments des elektrischen Hydraulikantriebsmotors (12) und einer Messung des Betriebsdrucks der von der Hydraulikpumpe (15) geförderten Hydraulikflüssigkeit bestimmt.

6. Nutzfahrzeug (1) gemäß einem der vorstehenden Ansprüche, wobei die mindestens eine hydraulisch betätigte Vorrichtung eine hydraulische Lenkvorrichtung (174) umfasst.

7. Nutzfahrzeug (1) gemäß Anspruch 4 in Kombination mit Anspruch 6, das mindestens einen Fahrgeschwindigkeitssensor (34) umfasst, der zum Messen einer Fahrgeschwindigkeit (45) des Nutzfahrzeugs (1) konfiguriert ist, und einen Lenksensor (384), der zum Messen eines Lenkbedarfs konfiguriert ist, wobei die Steuereinheit (30) den von der Hydraulikpumpe (15) geförderten Hydraulikflüssigkeitsstrom steuert und das Hydraulikverteilungsgehäuse (16) so steuert, dass die hydraulische Lenkvorrichtung (174) versorgt wird, wenn ein Lenkbedarf besteht oder wenn die Fahrgeschwindigkeit (45) des Nutzfahrzeugs (1) ungleich Null ist.

8. Nutzfahrzeug (1) gemäß Anspruch 4 in Kombination mit Anspruch 7 oder gemäß Anspruch 7, wobei das Hydraulikverteilergehäuse (16) so konfiguriert ist, dass es die hydraulische Lenkvorrichtung (174) vorrangig vor dem Hydraulikmotor (18) und gegebenenfalls vor einer weiteren hydraulisch betätigten Vorrichtung (171, 172, 173, 175) mit Hydraulikflüssigkeit versorgt , wenn die Summe (36) der Hydraulikflüssigkeitsstrombedarfe (35, 361, 362, 363, 364, 365) des Hydraulikmotors (18), der hydraulischen Lenkvorrichtung (174) und gegebenenfalls der anderen oder jeder der anderen hydraulisch betätigten Vorrichtungen (171, 172, 173, 175) größer ist als der maximale Hydraulikflüssigkeitsstrom (DPmax) der Hydraulikpumpe (15).

9. Nutzfahrzeug (1) gemäß einem der vorstehenden Ansprüche, wobei die mindestens eine hydraulisch betätigte Vorrichtung eine hydraulische Bremsvorrichtung (175) umfasst.

10. Nutzfahrzeug (1) gemäß Anspruch 4 in Kombination mit Anspruch 9, umfassend mindestens einen Fahrgeschwindigkeitssensor (34), der zum Messen einer Fahrgeschwindigkeit (45) des Nutzfahrzeugs (1) konfiguriert ist, und einen Bremssensor (385), der zum Messen eines Bremsbedarfs konfiguriert ist, und in dem die Steuereinheit (30) den von der Hydraulikpumpe (15) geförderten Hydraulikflüssigkeitsstrom steuert und das Hydraulikverteilungsgehäuse (16) so steuert, dass die Bremsvorrichtung (385) versorgt wird, wenn ein Bremsbedarf besteht oder wenn die Fahrgeschwindigkeit (45) des Nutzfahrzeugs (1) ungleich Null ist.

11. Nutzfahrzeug (1) gemäß Anspruch 4 in Kombination mit Anspruch 9 oder gemäß Anspruch 10, wobei das Hydraulikverteilergehäuse (16) so konfiguriert ist, dass es die hydraulische Bremsvorrichtung (175) vorrangig vor dem Hydraulikmotor (18) und gegebenenfalls vor einer weiteren hydraulisch betätigten Vorrichtung (171, 172, 173, 174) mit Hydraulikflüssigkeit versorgt, wenn die Summe (36) der Hydraulikflüssigkeitsstrombedarfe (35, 361, 362, 363, 364, 365) des Hydraulikmotors (18), der hydraulischen Bremsvorrichtung (175) und gegebenenfalls der anderen oder jeder der anderen hydraulisch betätigten Vorrichtungen (171, 172, 173, 174) größer ist als der maximale Hydraulikflüssigkeitsstrom (DPmax) der Hydraulikpumpe (15).

12. Nutzfahrzeug (1) gemäß einem der vorstehenden Ansprüche, das weiterhin eine Lastbeförderungsvorrichtung (27) umfasst und wobei die mindestens eine hydraulisch betätigte Vorrichtung mindestens einen hydraulischen Aktuator (171, 172, 173) zum Betätigen der Lastbeförderungsvorrichtung umfasst (27)

13. Nutzfahrzeug (1) gemäß Anspruch 12, wobei die Steuereinheit (30) so konfiguriert ist, dass sie das Hydraulikverteilergehäuse (16) so steuert, dass der oder die hydraulischen Aktuatoren (171, 172, 173) der Lastbehandlungsvorrichtung (27) nicht mit Hydraulikflüssigkeit versorgt werden, wenn ein Bewegungsbedarf (31) des Nutzfahrzeugs (1) größer als ein dritter Schwellenwert für den Bewegungsbedarf (SBD3) ist, und um den oder die Hydraulikaktuatoren (171, 172, 173) der Lastbeförderungsvorrichtung (27) mit Hydraulikflüssigkeit zu versorgen, wenn ein Bewegungsbedarf (31) des Nutzfahrzeugs (1) unter einem vierten Schwellenwert für den Bewegungsbedarf (SBD4) liegt.

14. Nutzfahrzeug (1) gemäß Anspruch 12 oder 13, das weiterhin umfassend:
- ein Steuerelement (37), das dazu bestimmt ist, von einem Bediener betätigt zu werden, um die Lastaufnahmemittel (27) zu steuern,
- mindestens einen Positionssensor (381, 382), der konfiguriert ist, um eine Position des Steuerelements (37) zu messen,
und wobei die Steuereinheit (30) konfiguriert ist, um einen Hydraulikflüssigkeitsstrombedarf (361, 362, 363) des oder jedes hydraulischen Aktuators (171, 172, 173) der Lastbehandlungsvorrichtung (27) anhand der Positionsmessung des Steuerorgans (37) zu bestimmen.

15. Nutzfahrzeug (1) gemäß einem der vorstehenden Ansprüche, wobei das hydrostatische Antriebssystem (8) weiterhin ein mechanisches Untersetzungsgetriebe (25) mit mehreren Drehmomentverhältnissen an der Antriebsachse (4a, 4b) umfasst, und wobei die Steuereinheit (30) so konfiguriert ist, dass sie den Hydraulikmotor (18) des hydraulischen Antriebssystems (14) als Reaktion auf eine Änderung des Gangs des mechanischen Getriebes (25) aktiviert.

## Claims

1. Working vehicle (1) comprising:
- an electrical energy source (6),
- a hydrostatic electric drive motor (7) powered with electrical energy by the electrical energy source (6),
- a hydraulic electric drive motor (12) powered with electrical energy by the electrical energy source (6),
- at least one transmission bridge (4a, 4b) equipped with drive wheels (5a, 5b),
- at least one motion need sensor (34) configured to measure a motion need (31) of the working vehicle (1),
- a hydrostatic transmission traction system (8) comprising a hydrostatic pump (9) driven by the hydrostatic electric drive motor (7), and a hydrostatic motor (10) connected to the hydrostatic pump (9), the hydrostatic motor (10) enabling the rotation of the drive wheels (5a, 5b) from a so-called transmission bridge (4a, 4b),
- a hydraulic system (13) comprising a hydraulic pump (15) driven by the hydraulic electric drive motor (12), a hydraulic distribution housing (16) connected to the hydraulic pump (15) and at least one hydraulic control device (171, 172, 173, 174, 175), the at least one hydraulic control device (171, 172, 173, 174, 175) being supplied with hydraulic fluid by the hydraulic distribution housing (16),
- a hydraulic transmission traction system (14) comprising a hydraulic motor (18) powered by the hydraulic distribution housing (16), the hydraulic motor (18) enabling the rotation of the drive wheels (5a, 5b) of a so-called transmission bridge (4a, 4b), and
- a control unit (30) configured to control, as a function of the motion need (34) of the working vehicle (1), a hydraulic fluid flow rate supplied by the hydraulic pump (15), and to control the hydraulic distribution housing (16), so as to distribute the hydraulic fluid flow rate supplied by said hydraulic pump (15) between the hydraulic control device(s) (171, 172, 173, 174, 175) and the hydraulic motor (18),
**characterised in that** the control unit (30) is configured to trigger the driving of the hydraulic motor (18) when the motion need (31) of the working vehicle (1) is greater than a first motion need threshold value (SBD₁), and to stop the driving of said hydraulic motor (18), when the motion need (31) of the working vehicle (1) is less than a second motion need threshold value (SBD₂).

2. Working vehicle (1) according to claim 1, comprising at least two transmission bridges (4a, 4b), each transmission bridge (4a, 4b) being equipped with drive wheels (5a, 5b), and in which the hydrostatic motor (10) of the hydrostatic transmission traction system (8) with coupled with a first transmission bridge (4a, 4b), and in which the hydraulic motor (18) of the hydraulic transmission traction system (14) is coupled with a second transmission bridge (4a, 4b).

3. Working vehicle (1) according to claim 1, wherein the hydrostatic motor (10) of the hydrostatic transmission traction system (8) and the hydraulic motor (18) of the hydraulic transmission traction system (14) are coupled with one same transmission bridge (4a, 4b).

4. Working vehicle (1) according to any one of the preceding claims, further comprising a rotation speed sensor (421), configured to measure a rotation speed (42) of the hydraulic electric drive motor (12),
and wherein the control unit (30) is configured to:
- determine a hydraulic fluid flow rate need (35) of the hydraulic motor (18), from the motion need (31) of the working vehicle (1),
- determine a hydraulic fluid flow rate setpoint value (39) of the hydraulic pump (15) by comparing a sum (36) of the hydraulic fluid flow rate needs of the or of each of the hydraulic control devices (361, 362, 363, 364, 365) and of a hydraulic fluid flow rate need (35) of the hydraulic motor (18) with the maximum hydraulic fluid flow rate (DPₘₐₓ) of the hydraulic pump (15), the hydraulic fluid flow rate setpoint value (39) of said hydraulic pump (15) corresponding to the smallest of the compared values,
- determine a rotation speed setpoint value (41) of the hydraulic electric drive motor (12) from the hydraulic fluid flow rate setpoint value (39) of the hydraulic pump (15) and a cylinder capacity (40) of said hydraulic pump (15), and
- enslave the measured value of the rotation speed (42) of the hydraulic electric drive motor (12) to the rotation speed setpoint value (41) of the hydraulic electric drive motor (12).

5. Working vehicle (1) according to claim 4, further comprising:
- a torque sensor (401) configured to measure the torque of the hydraulic electric drive motor (12), and
- a pressure sensor (402) configured to measure a service pressure of the hydraulic fluid repelled by the hydraulic pump (15),
- said hydraulic pump (15) has an adjustable cylinder capacity (40), and
- the control unit (30) is configured to determine the cylinder capacity (40) of said hydraulic pump (15) from a measurement of the torque of the hydraulic electric drive motor (12) and from a measurement of the service pressure of the hydraulic fluid repelled by the hydraulic pump (15).

6. Working vehicle (1) according to any one of the preceding claims, wherein said at least one hydraulic control device comprises a hydraulic direction device (174).

7. Working vehicle (1) according to claim 4 combined with claim 6, comprising at least one forward speed sensor (34) configured to measure a forward speed (45) of the working vehicle (1) and a direction sensor (384) configured to measure a direction need, and in which the control unit (30) controls the flow rate of the hydraulic fluid repelled by the hydraulic pump (15) and controls the hydraulic distribution housing (16), so as to power the hydraulic direction device (174), when there is a direction need or when the forward speed (45) of said working vehicle (1) is non-zero.

8. Working vehicle (1) according to claim 4 combined with claim 7 or according to claim 7, wherein the hydraulic distribution housing (16) is configured to supply the hydraulic direction device (174) with fluid, as a priority, with respect to the hydraulic motor (18) and, if necessary, to another so-called hydraulic control device (171, 172, 173, 175), when the sum (36) of the hydraulic fluid flow rate needs (35, 361, 362, 363, 364, 365) of the hydraulic motor (18), of the hydraulic direction device (174) and, if necessary, of the other or of each of the other hydraulic control devices (171, 172, 173, 175) is greater than the maximum hydraulic fluid flow rate (DPₘₐₓ) of the hydraulic pump (15).

9. Working vehicle (1) according to any one of the preceding claims, wherein the at least one hydraulic control device comprises a hydraulic braking device (175).

10. Working vehicle (1) according to claim 4 combined with claim 9, comprising at least one forward speed sensor (34) configured to measure a forward speed (45) of the working vehicle (1) and a braking sensor (385) configured to measure a braking need, and in which the control unit (30) controls the hydraulic distribution housing (16), so as to power the hydraulic braking device (175), when there is a braking need, or when the forward speed (45) of said working vehicle (1) is non-zero.

11. Working vehicle (1) according to claim 4 combined with claim 9 or according to claim 10, wherein the hydraulic distribution housing (16) is configured to supply the hydraulic braking device (175) with hydraulic fluid, as a priority, with respect to the hydraulic motor (18) and, if necessary, to another so-called hydraulic control device (171, 172, 173, 174), when the sum (36) of the hydraulic fluid flow rate needs (35, 361, 362, 363, 364, 365) of the hydraulic motor (18), of the hydraulic braking device (175) and, if necessary, of the other or of each of the other hydraulic control devices (171, 172, 173, 174) is greater than the maximum hydraulic fluid flow rate (DPₘₐₓ) of the hydraulic pump (15).

12. Working vehicle (1) according to any one of the preceding claims, further comprising a load handling device (27), and in which the at least one hydraulic control device comprises at least one hydraulic actuator (171, 172, 173) to actuate the load handling device (27).

13. Working vehicle (1) according to claim 12, wherein the control unit (30) is configured to control the hydraulic distribution housing (16), in order to not supply the hydraulic actuator(s) (171, 172, 173) of the load handling device (27) with hydraulic fluid flow rate, when a motion need (31) of said working vehicle (1) is greater than a third motion need threshold value (SBD₃), and to supply the hydraulic actuator(s) (171, 172, 173) of the load handling device (27) with hydraulic fluid flow rate, when a motion need (31) of said working vehicle (1) is less than a fourth motion need threshold value (SBD₄).

14. Working vehicle (1) according to claim 12 or 13, further comprising:
- a control member (37) intended to be actuated by an operator to control the load handling device (27),
- at least one position sensor (381, 382) configured to measure a position of the control member (37),
and in which the control unit (30) is configured to determine a hydraulic fluid flow rate need (361, 362, 363) of the or of each hydraulic actuator (171, 172, 173) of the load handling device (27) from the position measurement of the control member (37).

15. Working vehicle (1) according to any one of the preceding claims, wherein the hydrostatic transmission traction system (8) further comprises a mechanical reducer (25) with a plurality of ratios coupled with said transmission bridge (4a, 4b), and wherein the control unit (30) is configured to activate the hydraulic motor (18) of the hydraulic transmission traction system (14) in response to a ratio change of the mechanical reducer (25).
